# FASCICULE DE BREVET EUROPEEN

(11) **EP 0 335 781 B1**
(45) Date de publication et mention de la délivrance du brevet: **12.01.1994**
(21) Numéro de dépôt: 89400827.5
(22) Date de dépôt: 23.03.1989
(51) Int. Cl.: F16D 3/20

(54) **Corps à structure composite pour joint de transmission et son procédé de réalisation**
Eine Verbundstruktur aufweisender Körper für Antriebsgelenke und Verfahren zu dessen Herstellung
Composite material body for a transmission joint, and method of manufacturing same

(30) Priorité: 28.03.1988 FR 8804045
(43) Date de publication de la demande: 04.10.1989
(73) Titulaire: GKN GLAENZER SPICER, F-78955 Carrières-sous-Poissy (FR)
(72) Inventeur: Rouillot, Michel, F-78100 Saint Germain en Laye (FR)
(74) Mandataire: Polus, Camille

(56) Documents cités:
- EP-A- 0 009 007
- EP-A- 0 034 073
- EP-A- 0 109 451
- DE-A- 3 331 789
- DE-B- 1 046 415
- FR-A- 1 228 149
- FR-A- 1 268 917
- FR-A- 2 172 580
- FR-A- 2 508 851
- FR-A- 2 512 140
- FR-A- 2 567 222
- GB-A- 2 013 556
- US-A- 2 194 798
- US-A- 4 722 717

## Description

La présente invention a pour objet un corps de joint de transmission du type comportant plusieurs chemins de portée répartis autour de l'axe du corps pour coopérer avec des éléments d'articulation du joint de transmission et un système de liaison du corps de joint à un organe d'une transmission.

L'invention concerne notamment une tulipe pour joint de transmission comportant plusieurs chemins de roulement répartis autour de l'axe de la tulipe et comportant chacun deux pistes parallèles de roulement agencées en vis-à-vis, et une pièce de liaison de la tulipe à un arbre.

La présente invention a pour but de proposer un corps de joint qui, intégré dans une transmission de véhicule automobile, et, tout en conservant ou en augmentant ses capacités de transmission de couple, permet de réaliser un gain de poids particulièrement important ainsi qu'une amélioration du confort du véhicule en assurant une meilleure filtration des bruits et vibrations apparaissant dans la transmission, ainsi qu'une très bonne résistance à la corrosion.

Le document US-A-2.194.798 décrit et représente un corps de joint de transmission dans lequel les chemins de portée sont reliés à une enveloppe métallique du corps par moulage interne d'un alliage d'aluminium. La nécessité de couler un alliage dont la température de fusion est supérieure à 500°C provoque, par des effets de chocs thermiques, une détérioration des propriétés mécaniques et métallurgiques des chemins de portée qui sont réalisés sous la forme d'inserts métalliques. De plus l'opération de moulage à très haute température suivie d'un refroidissement ne permet pas de garantir avec précision les caractéristiques dimensionnelles et les tolérances fonctionnelles nécessaires à un bon fonctionnement du joint de transmission. Le poids d'un tel corps de joint de transmission est également encore particulièrement élevé par rapport aux besoins d'allègement mentionnés ci-dessus.

Afin de remédier à ces inconvénients, l'invention propose un corps de joint de transmission du type comportant plusieurs chemins de portée réalisés sous forme d'au moins un insert métallique, répartis autour de l'axe du corps et comportant chacun deux pistes agencées pour coopérer avec des éléments d'articulation du joint de transmission et un système de liaison du corps de joint à un organe d'une transmission, caractérisé en ce qu'il comporte une enveloppe réalisée en matériau composite renforcé par des fibres continues et à l'intérieur de laquelle sont agencés lesdits chemins de portée, en ce que l'espace interne délimité radialement par la surface périphérique interne de l'enveloppe et par des surfaces des chemins de portée en regard de cette surface périphérique interne est rempli par un matériau constitué d'une matrice thermodurcissable ou thermoplastique renforcée de fibres courtes ou de particules, et en ce qu'une portion du système de liaison est reçue dans le matériau de remplissage.

Selon d'autres caractéristiques de l'invention :
- la portion du système de liaison comporte, à sa surface cylindrique externe des voiles axiaux faisant saillie radialement vers l'extérieur et noyés dans le matériau 34 avec lequel ils coopèrent pour assurer la transmission du couple auxdites pistes ;
- les voiles sont constitués par des cannelures axiales ;
- la portion du système de liaison délimite axialement ledit espace interne et forme un fond de la cavité intérieure du corps ;
- la portion du système de liaison comporte au moins un insert métallique noyé dans le matériau de remplissage ;
- l'enveloppe est un cylindre ;
- la directrice du cylindre est sensiblement polygonale ;
- la directrice du cylindre est un cercle ;
- les fibres continues de renfort de l'enveloppe sont orientées angulairement par rapport à l'axe du corps ;
- une portion du matériau de remplissage s'étend sur la surface périphérique externe de l'enveloppe ;
- ladite portion du matériau forme une surface fonctionnelle d'accrochage notamment pour un joint d'étanchéité ou un capot ;
- un composant extérieur est noyé dans ladite portion du matériau de remplissage ;
- chaque piste est constituée par un tronçon d'un profilé ;
- chaque piste est constituée par un insert indépendant ;
- les deux pistes adjacentes de deux chemins de portée voisins sont reliées entre elles par une partie longitudinale interne venue de matière, de manière à constituer un insert ;
- chacun des inserts est relié aux autres inserts par une partie longitudinale externe venue de matière, de manière à former un insert unique ;
- les deux pistes en vis-à-vis d'un chemin de portée sont reliées entre elles par une portion transversale d'extrémité agencée dans le fond de la cavité intérieure ;
- la portion transversale est une partie venue de matière avec les deux pistes et repliée à 90° par rapport aux deux pistes ;
L'invention propose également un procédé de réalisation d'un corps de joint de transmission selon l'invention, caractérisé en ce qu'il consiste à :
- a) disposer dans un moule d'injection une enveloppe extérieure en matériau composite renforcé, les chemins de portée réalisés sous la forme d'au moins un insert et une portion d'un système de liaison ;
- b) injecter le matériau de remplissage constitué d'une matrice thermoplastique ou thermodurcissable renforcé de fibres courtes ou de particules, dans lequel est reçue une portion du système de liaison, dans l'espace interne ; et
- c) démouler le corps ainsi réalisé.

L'invention propose enfin un moule pour la mise en oeuvre du procédé, caractérisé en ce qu'il comporte une paroi extérieure recevant l'enveloppe et le système de liaison dans des portions de profits complémentaires, un noyau central dont le profit extérieur est complémentaire de celui de la cavité intérieure du corps et qui comporte des moyens de maintien en position, et une paroi transversale de fermeture délimitant axialement ledit espace interne, les moyens de maintien étant par exemple constitués par au moins un aimant permanent fixé au noyau qui coopère avec des chemins de portée réalisés sous la forme d'au moins un insert métallique.

La figure 1 est une vue en coupe axiale selon la ligne 1-1 de la figure 2 d'un corps de joint de transmission qui, dans ce mode de réalisation, est à titre d'exemple une tulipe de joint de transmission à tripode ;
- la figure 2 est une vue en section selon la ligne 2-2 de la figure 1 ;
- la figure 3 est une vue partielle en section selon la ligne 3-3 de la figure 1 ;
La figure 4 est une vue en section selon la ligne 4-4 de la figure 1 de la portion d'extrémité de la queue de liaison ;
Les figures 5, 6 et 7 sont des vues similaires à celles des figures 1, 2, et 4 d'un second mode de réalisation d'une tulipe ;
Les figures 8, 9, et 10, sont des vues similaires à celles des figures 1, 2, et 3 d'un troisième mode de réalisation d'une tulipe ;
La figure 11 est une vue similaire à celle de la figure 2 d'un quatrième mode de réalisation d'une tulipe ;
Les figures 12 et 13 sont des vues similaires à celles des figures 1 et 2 d'un cinquième mode de réalisation d'une tulipe ;
Les figures 14 et 15 sont des vues similaires à celles des figures 1 et 2 d'un sixième mode de réalisation d'une tulipe ;
Les figures 16 et 17 sont des vues similaires à celles des figures 1 et 2 d'un septième mode de réalisation d'une tulipe ;
La figure 18 est une vue en coupe axiale selon la ligne 18-18 de la figure 19 d'un moule conforme aux enseignements de l'invention permettant la réalisation simultanée de deux tulipes conformes au premier mode de réalisation représenté aux figures 1 à 4 ; et
La figure 19 est une vue partielle en coupe selon la ligne 19-19 de la figure 18.

Les figures 20 et 21 sont des vues similaires à celle des figures 1 et 2 d'un huitième mode de réalisation d'une tulipe sans queue de liaison intégrée.

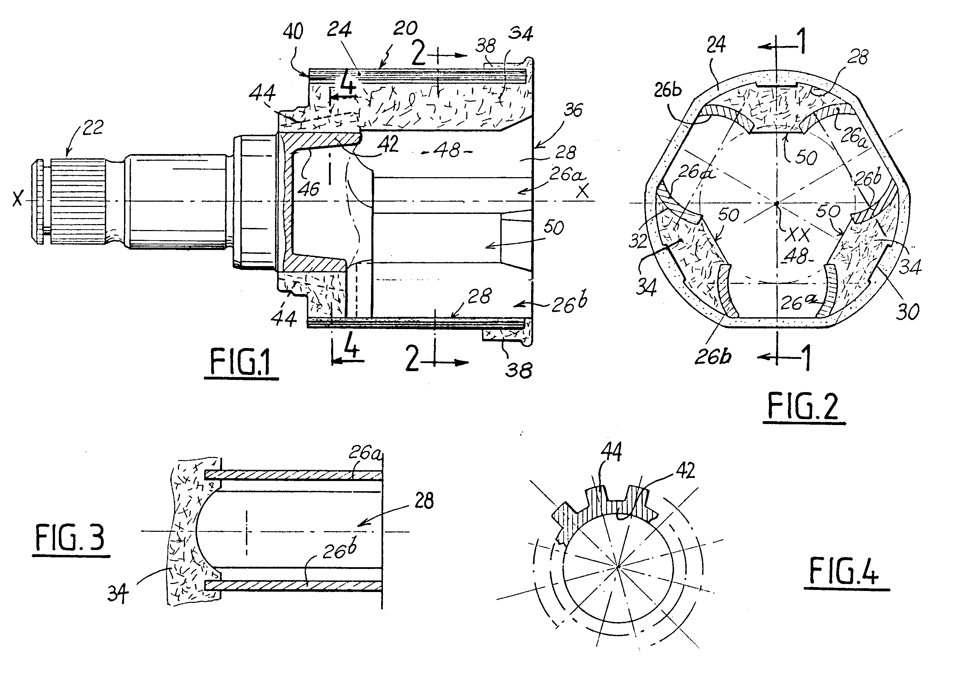

On a représenté aux figures 1 à 4 une tulipe 20 pour joint à tripode comprenant pour l'essentiel une queue de liaison métallique 22, une enveloppe cylindrique 24 coaxiale à l'axe X-X de la queue de liaison 22 et trois chemins de roulement répartis angulairement à 120° constitués chacun par deux pistes parallèles en vis-à-vis 26a et 26b.

Chaque piste de roulement 26a, 26b est constituée par un insert métallique indépendant qui est un tronçon d'un profilé métallique incurvé.

Comme on peut le constater à la figure 2, l'enveloppe extérieure 24 est un cylindre dont la courbe directrice est un triangle équilatéral dont les sommets sont arrondis et s'inscrivent dans un cercle commun centré sur l'axe X-X.

L'enveloppe 24 comporte à sa surface périphérique interne 28 trois barrettes axiales 30 qui font saillie radialement vers l'intérieur et qui sont réparties angulairement à 120° entre deux pistes adjacentes de deux chemins de roulement voisins.

L'enveloppe cylindrique extérieure 24 est réalisée en un matériau composite à matrice organique renforcé par des fibres continues qui peuvent être orientées angulairement par rapport à l'axe X-X de la tulipe, par exemple d'un angle compris entre 60 et 75°.

L'espace interne délimité radialement d'une part par la surface périphérique interne 28 de l'enveloppe 24 et, d'autre part, par les surfaces en regard 32 de chacun des inserts métalliques, est rempli par un matériau de remplissage 34.

Le matériau 34 peut être une résine thermodurcissable ou thermoplastique renforcée de fibres courtes.

Le matériau est ici un matériau de moulage injecté dans la tulipe, selon un procédé qui sera décrit plus avant, remplit l'espace interne de façon à assurer un positionnement et une fixation des inserts métalliques 26a et 26b dans l'enveloppe extérieure 24.

La face radiale d'extrémité avant 36 de la tulipe (à droite en considérant la figure 1), est une face plane obtenue grâce à une paroi correspondante d'un moule qui délimite l'espace interne rempli par le matériau de moulage 34. Toutefois, comme on peut le constater à la figure 1, le matériau de moulage 34 peut se prolonger radialement vers l'extérieur pour venir recouvrir partiellement la surface périphérique externe de l'enveloppe extérieure 24 par une partie de forme fonctionnelle 38 qui peut servir à l'accrochage d'un joint d'étanchéité ou d'un capot.

Selon une caractéristique non représentée la portion de matériau 38 peut servir à fixer un composant extérieur réalisé partiellement sous forme d'un insert partiellement ou totalement noyé dans cette portion. Il peut par exemple s'agir d'une bague crénelée pour un capteur des paramètres de rotation de l'arbre de transmission équipé de la tulipe.

Selon la forme du moule, la partie de forme de recouvrement 38 peut posséder un profil différent du profil extérieur de l'enveloppe 24, par exemple circulaire lorsque celui-ci est triangulaire.

Le matériau de moulage s'étend dans l'espace interne jusqu'à la face plane radiale d'extrémité arrière 40 de la tulipe ainsi qu'au-delà ( vers la gauche en considérant la figure 1) de cette face arrière pour venir entourer la portion d'extrémité 42 de la queue de liaison métallique 22.

En effet, conformément à l'invention, la portion d'extrémité 42 est reçue dans le matériau de moulage afin d'assurer la transmission du couple depuis l'arbre auquel est reliée la queue de liaison 22 jusqu'aux inserts métalliques 26a et 26b.

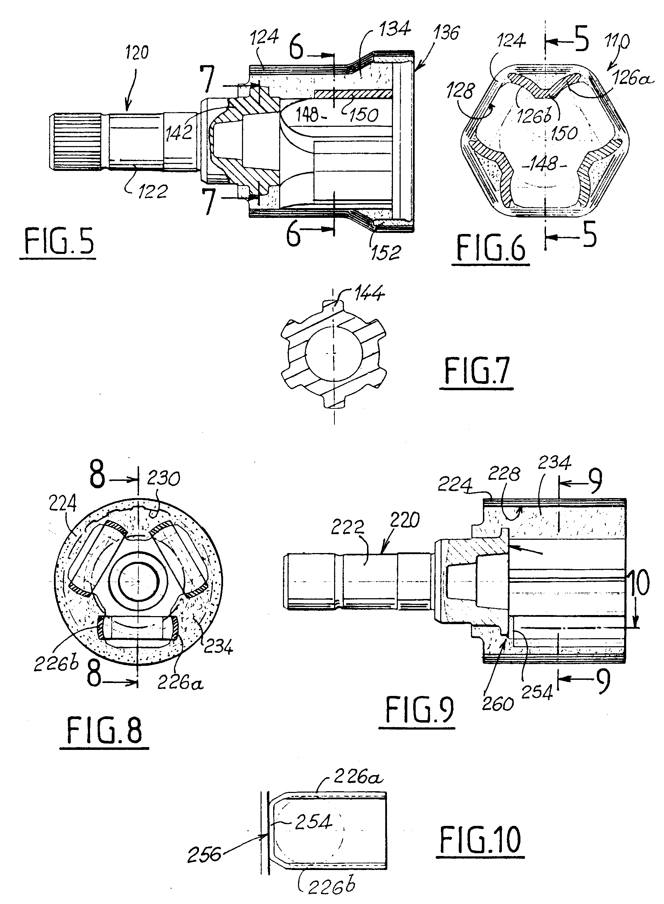

A cet effet, et comme on peut le constater à la figure 4, la portion d'extrémité 42 comporte à sa surface périphérique des voiles axiaux 44 faisant saillie radialement vers l'extérieur et qui vont en s'évasant en direction de la face avant ouverte 36.

Dans ce mode de réalisation, les voiles axiaux 44 sont constitués par des cannelures axiales de la queue de liaison qui peuvent être réalisées par une opération de filage.

Le profil interne en forme de coupelle 46 de la portion d'extrémité 42 délimite la cavité interne 48 de la tulipe prévue pour recevoir le tripode et ses éléments de roulement.

La cavité 48 est enfin délimitée radialement par trois portions de faces planes 50, s'étendant dans des plans parallèles à l'axe X-X et qui relient entre eux les bords radiaux internes de deux inserts métalliques adjacents de deux chemins de roulement voisins.

Les méplats axiaux 50 sont obtenus grâce à une forme correspondante du moule de réalisation.

La forme triangulaire du profil de l'enveloppe 24, les barrettes 30 et les voiles axiaux 44 participent en combinaison à la transmission des efforts de couple.

Les inserts métalliques 26a et 26b peuvent être réalisés très aisément à partir d'un profilé en acier traité par découpe et formage à froid.

Les fibres continues de renfort de l'enveloppe 24 participent à la transmission du couple et évitent les déformations radiales de la tulipe.

La tulipe 110 représentée aux figures 5 à 7 diffère du premier mode de réalisation qui vient d'être décrit en plusieurs points.

Comme on peut le constater à la figure 6, les deux inserts adjacents 126a et 126b sont reliés entre eux par une partie longitudinale interne 150, venue de matière avec les deux pistes, de façon à constituer un insert métallique.

La tulipe ne comporte ainsi que trois inserts métalliques indépendants qui délimitent la cavité interne 148 de la tulipe en coopération avec la surface périphérique interne 128 de l'enveloppe 124.

Comme on peut le constater à la figure 5, l'enveloppe externe 124 s'évase radialement au voisinage de la face d'extrémité 136 et est renforcée par un élément de renfort interne 152 également réalisé sous la forme d'un insert métallique partiellement noyé dans te matériau de moulage 134. La portion d'extrémité 142 de la queue de liaison 122 possède également des cannelures 144 qui sont ici d'une très faible longueur axiale.

Le mode de réalisation représenté aux figures 8 à 10 diffère du premier mode réalisation décrit en référence aux figures 1 à 4 en ce que les deux inserts 226a et 226b définissant les pistes de roulement parallèles d'un même chemin de roulement sont reliées entre-elles par une portion transversale d'extrémité 254.

Comme on peut le constater à la figure 10, la portion de liaison d'extrémité 254 est une portion venue de matière avec les deux pistes 226a et 226b de façon à constituer un seul insert métallique. La tulipe ainsi constituée ne comporte donc que trois inserts métalliques indépendants, c'est-à-dire un pour chaque chemin de roulement.

Comme on peut également le constater à la figure 8, les barrettes 230 sont ici en grand nombre et réparties régulièrement à la surface périphérique interne 228 de l'enveloppe 224 de façon à lui conférer un aspect cannelé qui augmente encore la tenue au couple de la tulipe.

Le positionnement axial de chacun des trois inserts dans la tulipe est assuré par la face transversale d'extrémité 256 de la portion 254 qui est en butée contre la face d'extrémité en vis-à-vis 258 de la queue de liaison 222. Afin de faciliter la réalisation de la tulipe, les inserts peuvent être maintenus en position par rapport à la queue métallique 222 par des points de soudage 260 réalisés préalablement à l'opération de moulage.

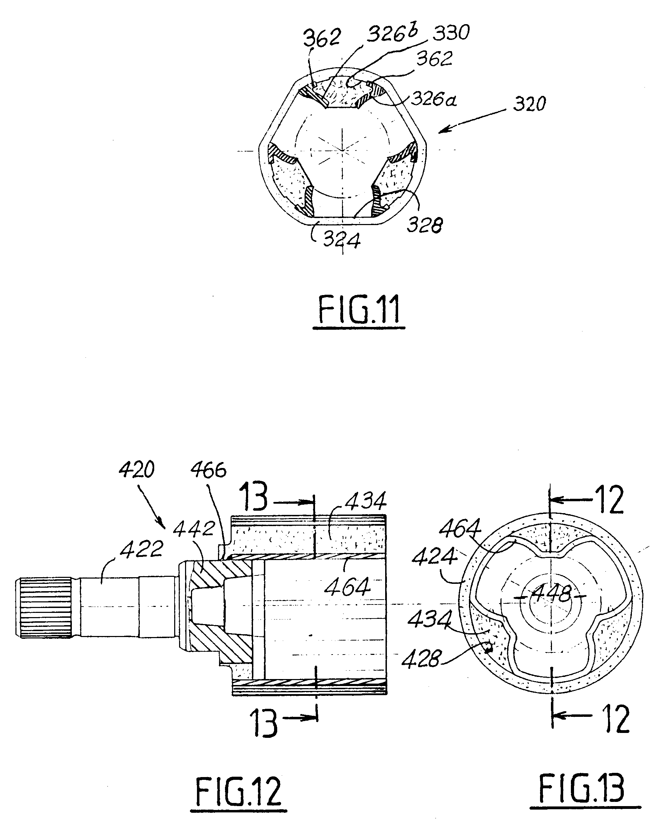

Le mode de réalisation représenté à la figure 11 diffère de celui de la figure 2 par la forme de chacun des six inserts indépendants dont chacun, 326b et 326a, comporte un bord interne recourbé 362 qui épouse la forme de la paroi interne 328 de l'enveloppe extérieure 324 et qui est noyé dans le matériau de moulage.

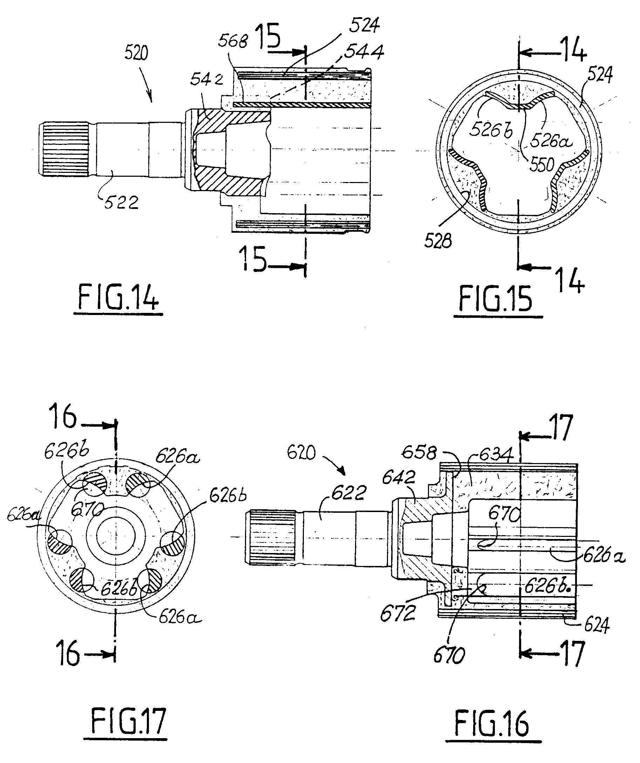

Dans le mode de réalisation représenté aux figures 12 et 13, l'ensemble des pistes constituant les chemins de roulement sont réalisées sous la forme d'un seul insert métallique tubulaire 464 qui délimite radialement la cavité interne 448 de la tulipe ainsi que, en coopération avec la surface périphérique interne 428 de l'enveloppe extérieure 424, l'espace interne rempli par le matériau de moulage 434.

L'insert métallique unique 464 est soudé par ses parties radiales intérieures à la surface périphérique externe 466 de la portion d'extrémité 442 de la queue de liaison métallique 422.

Le mode de réalisation représenté aux figures 14 et 15 est très proche de celui représenté aux figures 5 à 7, mais il se caractérise par le fait que chacun des trois inserts métalliques possède une portion d'extrémité arrière 568 qui s'étend axialement entre deux voiles axiaux 544 de la portion d'extrémité 542 de la queue de liaison métallique 522. Cette coopération permet d'améliorer la transmission du couple entre la queue de liaison 522 et les pistes de roulement 526a et 526b.

Dans le mode de réalisation représenté aux figures 16 et 17 les pistes de roulement 626a et 626b sont constituées par six inserts métalliques indépendants partiellement noyés dans le matériau de moulage 634. Chaque insert métallique est constitué par une tige cylindrique s'étendant parallèlement à l'axe de la tulipe dont la plus grande partie à été usinée depuis un fond 670 jusqu'à l'extrémité ouverte de la tulipe pour former la piste de roulement proprement dite. La portion d'extrémité arrière cylindrique non usinée 672 s'étend axialement à travers le matériau de moulage 634 pour venir en butée axiale contre la face radiale d'extrémité 658 de la portion d'extrémité 642 de la queue de liaison 622.

Chacun des six petits cylindres peut être soudé à la face d'extrémité 658.

Selon des variantes non représentées, la queue peut être remplacée par une autre pièce de liaison par example en forme de moyeu, de bride de roue dentée ...

L'enveloppe a pour rôle essentiel de limiter les déformation radiales du joint sous couple. A cet effet il faut choisir de préférence un matériau composite renforcé de fibres continues, ces fibres étant orientées entre ± 45° et ± 90° par rapport à l'axe principal du joint (une valeur caractéristique étant ± 70°), de façon à obtenir pour l'enveloppe extérieure des propriétés de résistance à l'éclatement très élevées (500 à 800 MPa). Lorsque le joint est de longueur importante (besoin de coulissement important), le renfort fibreux sera optimisé de façon à donner un bon compromis entre la résistance à l'éclatement et à la flexion (angle de renfort à environ ± 50 à ± 60° par rapport à l'axe principal du joint.

Les fibres sont en général des fibres de verre de coût faible, mais en cas de besoin de propriétés mécaniques supérieures, on pourra utiliser d'autres renforts, par exemple des fibres de carbone pour améliorer la rigidité, ou des fibres d'aramide pour améliorer la résistance aux chocs ainsi que tout mélange de ces différents renforts.

Le matériau de la matrice sera choisi en fonction non seulement de ses performances mécaniques, mais aussi thermiques, parmi les résines thermodurcissables classiques (époxy, polyester) ou certaines résines thermoplastiques (polyester, polyamides...).

Le taux de renfort en fibres sera élevé, environ 60 % en volume.

Le poids volumique de l'enveloppe sera en général voisine de 2.000 kg/m3.

Le remplissage a deux rôles essentiels : transmettre les efforts entre les pistes et l'enveloppe d'une part et, d'autre part, transmettre les couples au niveau de liaison avec la queue de liaison.

Pour obtenir de bonnes propriétés en compression et en cisaillement, une possibilité est d'utiliser un matériau polymère renforcé de manière isotropique par des fibres courtes et de préférence injectables pour obtenir un procédé de fabrication aisé. Les matrices thermoplastiques sont particulièrement intéressantes de par leurs temps de cycle de mise en oeuvre courts. On peut citer à titre d'exemple les polyamides polyesters, thermoplastiques, le choix étant fait à partir d'un compromis prix/performances mécaniques et thermiques.

Ces matrices peuvent être modifiées par l'addition d'élastomères, de particules métalliques en fonction des propriétés complémentaires (besoin d'amortissement ou de conductibilité thermique).

Le renfort fibreux sera de préférence en verre et la longueur des fibres, en général de 3 à 10 mm, dépendra à la fois des propriétés recherchées et des conditions de mise en oeuvre.

Le poids volumique du matériau de remplissage sera voiisine de 1.600 kg/m3.

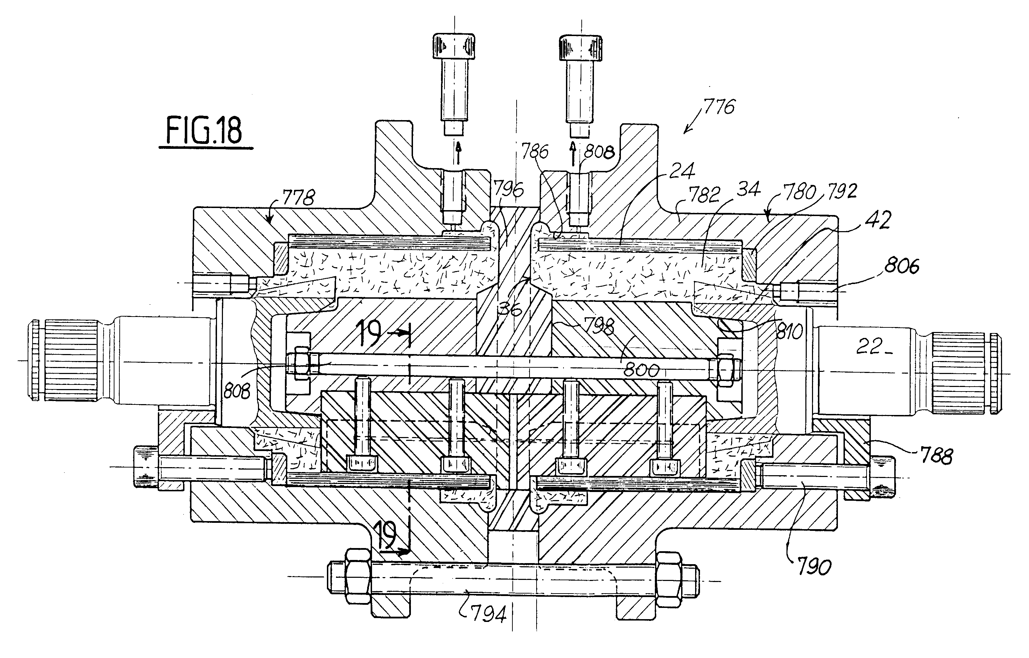

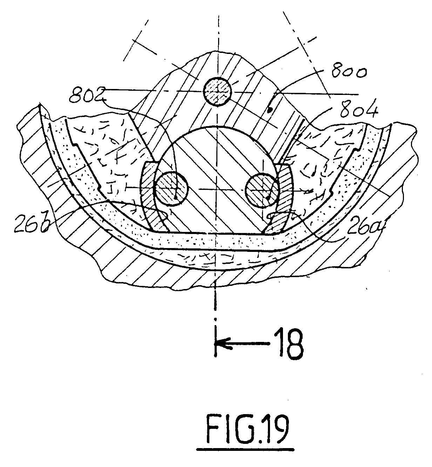

On a représenté aux figures 18 et 19 un moule d'injection 776 en deux parties 778 et 780 permettant de réaliser simultanément deux tulipes conformes aux enseignements de l'invention.

Le moule qui va maintenant être décrit n'est pas un moule permettant la réalisation en grande série mais un moule prototype permettant d'expliciter les principes généraux d'architecture du moule et de réalisation des tulipes.

Chacune des deux parties de moule 778 et 780 est pour l'essentiel constituée par une paroi extérieure de moule 782 comportant un profil interne 784 qui est complémentaire d'une part du profil extérieur de l'enveloppe 24 et, d'autre part, du profil extérieur de la partie arrière de la portion d'extrémité 42 de la queue de liaison 22.

La partie avant de la paroi de moule 782 comporte un profil intérieur 786 de forme complémentaire de celui de la partie de forme fonctionnelle 38 que l'on désire réaliser sur la surface périphérique externe de l'enveloppe 24.

Le demi-moule 780 comporte un bouchon d'extrémité 788 qui permet de maintenir la queue de liaison 22 axialement en place dans le moule et qui est relié au corps du moule par trois vis 790 qui prennent appui sur une bague annulaire d'éjection 792.

Les deux demi-moules 778 et 780 sont reliés entre eux par des tirants filetés 794 de manière à enserrer une paroi radiale intermédiaire 796 dont les profils latéraux 798 permettent de définir le profil de la face avant 36 de chacune des deux tulipes.

Conformément à l'invention le noyau interne 800 de chacun des deux demi-moules, qui présente un profil extérieur complémentaire de celui de la cavité intérieure de la tulipe que l'on désire réaliser, comporte à sa partie inférieure des aimants permanents 802 et 804.

Les aimants permanents 802 et 804 sont agencés, comme on peut le constater à la figure 19, de manière à maintenir en position, par attraction magnétique, les deux inserts inférieurs 26a et 26b préalablement à l'injection du matériau de moulage 34 par un orifice d'injection 802.

Chaque demi-moule comporte enfin un orifice radial 804 permettant de vérifier le bon remplissage du moule par le matériau de moulage 34 ainsi que l'échappement de l'air lors de l'opération de moulage.

L'operation de moulage s'effectue de la manière suivante :
- on place dans un premier temps les inserts métalliques en position sur le noyau central 800 par rapport auquel ils sont maintenus grâce aux aimants permanents 802 et 804 ;
- après avoir mis en place la bague d'éjection 792, on introduit dans le demi-moule l'enveloppe extérieure composite 24 en butée contre la bague 792 ;
- on met en place la queue métallique qui est guidée dans sa partie correspondante de la paroi de moule 784 ;
- on bride la pièce 788 à l'aide des vis 790 ;
- on met ensuite en place les noyaux 800 et la paroi intermédiaire 796 avec laquelle ils forment un tout grâce au tirant central 808 puis on referme les deux demi-moules à l'aide des tirants 794.

L'ensemble de ces opérations de mise en place et d'assemblage étant réalisé on injecte alors le matériau de moulage 34 par les orifices 802 jusqu'à ce que le moule soit parfaitement rempli.

L'opération de démoulage s'effectue en séparant dans un premier temps chacun des deux demi-moules puis en enlevant la pièce de bridage 788. On vient ensuite visser à nouveau les vis 790 dans les trous taraudés correspondants de façon à venir pousser sur la bague d'éjection 792 ce qui provoque l'éjection de la tulipe réalisée hors de son demi-moule.

Lors de l'opération de moulage l'étanchéité est assurée par la coopération cône sur cône du profil intérieur de la portion d'extrémité 42 de la queue de liaison 22 avec le cône d'extrémité correspondant 810 du noyau.

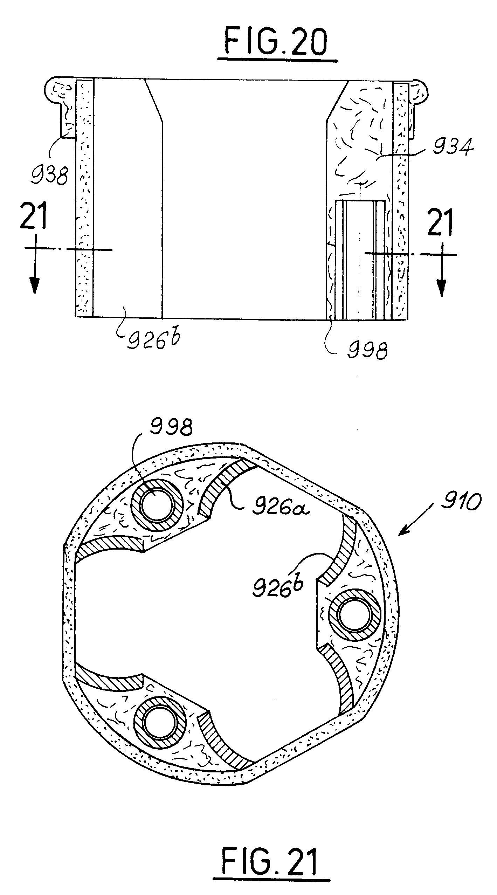

Dans le mode de réalisation représenté aux figures 20 et 21, la forme et la structure de la tulipe 910 sont très proches de celles représentées aux figures 1 et 2, notamment en ce qui concerne l'agencement des inserts indépendants 926a et 926b.

Toutefois, dans ce mode de réalisation l'extrémité de la queue de liaison (non représentée) n'est pas noyée dans le matériau de moulage 934. Ce dernier reçoit en effet trois inserts métalliques axiaux taraudés 998 qui sont noyés dans la matrice organique renforcée et qui permette la liaison ultérieure par boulonnage d'une queue de liaison.

## Revendications

1. Corps (20) de joint de transmission du type comportant plusieurs chemins de portée réalisés sous forme d'au moins un insert métallique, répartis autour de l'axe du corps et comportant chacun deux pistes agencées pour coopérer avec des éléments d'articulation du joint de transmission et un système de liaison du corps de joint à un organe d'une transmission, caractérisé en ce qu'il comporte une enveloppe réalisée en matériau composite renforcé par des fibres continues et à l'intérieur de laquelle sont agencés lesdits chemins de portée, en ce que l'espace interne délimité radialement par la surface périphérique interne (28) de l'enveloppe (24) et par des surfaces (32) des chemins de portée en regard de cette surface périphérique interne est rempli par un matériau (34) constitué d'une matrice thermodurcissable ou thermoplastique renforcé de fibres courtes ou de particules, et en ce qu'une portion (42) du système de liaison (22) est reçue dans le matériau de remplissage.

2. Corps de joint de transmission selon la revendication 1, caractérisé en ce que ladite portion (42) du système de liaison comporte, à sa surface cylindrique externe, des voiles axiaux (44) faisant saillie radialement vers l'extérieur et noyés dans le matériau (34) avec lequel ils coopèrent pour assurer la transmission du couple auxdites pistes (26a, 26b).

3. Corps de joint de transmission selon la revendication 2, caractérisé en ce que les voiles sont constitués par des cannelures axiales (44).

4. Corps de joint de transmission selon l'une quelconque des revendications précédentes, caractérisé en ce que ladite portion (42) du système de liaison délimite axialement ledit espace interne et forme un fond de la cavité intérieure (48) du corps.

5. Corps de joint de transmission selon la revendication 1, caractérisé en ce que ladite portion du système de liaison comporte au moins un insert métallique (998) noyé dans le matériau de remplissage (934).

6. Corps de joint de transmission selon l'une quelconque des revendications précédentes, caractérisé en ce que l'enveloppe est un cylindre.

7. Corps de joint de transmission selon la revendication 6, caractérisé en ce que la directrice du cylindre est sensiblement polygonale.

8. Corps de joint de transmission selon la revendication 6, caractérisé en ce que la directrice du cylindre est un cercle.

9. Corps de joint de transmission selon l'une quelconque des revendications précédentes, caractérisé en ce que les fibres continues de renfort de l'enveloppe sont orientées angulairement par rapport à l'axe du corps.

10. Corps de joint de transmission selon l'une quelconque des revendications précédentes, caractérisé en ce qu'une portion du matériau de remplissage (34) s'étend sur la surface périphérique externe de l'enveloppe (24).

11. Corps de joint de transmission selon la revendication 10, caractérisé en ce que ladite portion du matériau forme une surface fonctionnelle (38) d'accrochage, notamment pour un joint d'étanchéité ou un capot.

12. Corps de joint de transmission selon l'une des revendications 10 ou 11, caractérisé en ce qu'un composant extérieur est noyé dans ladite portion (34) du matériau de remplissage.

13. Corps de joint de transmission selon l'une quelconque des revendications précédentes, caractérisé en ce que chaque piste (26a, 26b) est constituée par un tronçon d'un profilé métallique.

14. Corps de joint de transmission selon l'une des revendications 13 ou 14, caractérisé en ce que chaque piste est constituée par un insert indépendant (26a, 26b).

15. Corps de joint de transmission selon l'une des revendications 1 à 3, caractérisé en ce que les deux pistes adjacentes (26a, 26b) de deux chemins de portée voisins sont reliées entre elles par une partie longitudinale interne (150) venue de matière, de manière à constituer un insert.

16. Corps de joint de transmission selon la revendication 15, caractérisé en ce que chacun des inserts est relié aux autres inserts par une partie longitudinale externe venue de matière, de manière à former un insert unique (464).

17. Corps de joint de transmission selon l'une des revendications 1 à 13, caractérisé en ce que les deux pistes en vis-à-vis (226a, 226b) d'un chemin de portée sont reliées entre elles par une portion transversale d'extrémité (254) agencée dans le fond de la cavité intérieure.

18. Corps de joint de transmission selon la revendication 17, caractérisé en ce que la portion transversale (254) est une partie venue de matière avec tes deux pistes et repliée à 90° par rapport aux deux pistes (226a, 226b).

19. Procédé de réalisation d'un corps de joint de transmission, selon l'une quelconque des revendications précédentes, caractérisé en ce qu'il consiste à:
- a) disposer dans un moule d'injection une enveloppe extérieure en matériau composite renforcé, des chemins de portée réalisés sous la forme d'au moins un insert et une portion d'un système de liaison ;
- b) injecter le matériau de remplissage constitué d'une matrice thermoplastique ou thermodurcissable renforcé de fibres courtes ou de particules, dans lequel est reçue une portion du système de liaison, dans l'espace interne ; et
- c) démouler le corps ainsi réalisé.

20. Moule (776) pour la mise en oeuvre du procédé selon la revendication 19, caractérisé en ce qu'il comporte une paroi extérieure (782) recevant l'enveloppe (24) et te système de liaison (22) dans des portions (784) de profits complémentaires, un noyau central (800) dont le profit extérieur est complémentaire de celui de la cavité intérieure (48) du corps et qui comporte des moyens de maintien en position, et une paroi transversale (796) de fermeture délimitant axialement ledit espace interne, et ce que lesdits moyens de maintien sont constitués par au moins un aimant permanent (802, 804) fixé au noyau qui coopèrent avec des chemins de portée réalisés sous la forme d'au moins un insert métallique.

## Claims

1. Body (20) for a transmission joint of the type comprising a plurality of bearing passageways in the form of at least one metal insert, distributed around the axis of the body and each comprising two tracks to co-operate with articulation elements of the transmission joint and a system for connecting the joint body to a transmission device, characterised in that it includes a case which is made from a composite material reinforced by continuous fibres and in the interior of which are arranged the said bearing passageways, the internal space radially defined by the inner peripheral surface (28) of the case (24) and by surfaces (32) of the bearing passageways facing this internal peripheral surface is filled with a material (34) constituted by a thermosetting or thermoplastic matrix reinforced with short fibres or particles, and a portion (42) of the connection system (22) is received in the filling material.

2. Body for a transmission joint as claimed in Claim 1, characterised in that the said portion (42) of the connection system comprises on the outer cylindrical surface thereof axial webs (44) which project radially outwards and are embedded in the material (34) with which they co-operate in order to ensure the transmission of the torque to the said tracks (26a, 26b).

3. Body for a transmission joint as claimed in Claim 2, characterised in that the webs are constituted by axial splines (44).

4. Body for a transmission joint as claimed in any one of the preceding claims, characterised in that the said portion (42) of the connection system axially defines the said internal space and forms an end of the internal cavity (48) of the body.

5. Body for a transmission joint as claimed in Claim 1, characterised in that the said portion of the connection system includes at least one metal insert (998) embedded in the filling material (934).

6. Body for a transmission joint as claimed in any one of the preceding claims, characterised in that the case is a cylinder.

7. Body for a transmission joint as claimed in Claim 6, characterised in that the directrix of the cylinder is substantially polygonal.

8. Body for a transmission joint as claimed in Claim 6, characterised in that the directrix of the cylinder is a circle.

9. Body for a transmission joint as claimed in any one of the preceding claims, characterised in that the continuous fibres are angularly oriented with respect to the axis of the body.

10. Body for a transmission joint as claimed in any one of the preceding claims, characterised in that a portion of the filling material (34) extends on the outer peripheral surface of the case (24).

11. Body for a transmission joint as claimed in Claim 10, characterised in that the said portion of the material forms a functional surface (38) for the fastening, particularly for a seal or a cap.

12. Body for a transmission joint as claimed in one of Claims 10 or 11, characterised in that an exterior component is embedded in the said portion (34) of the filling material.

13. Body for a transmission joint as claimed in any one of the preceding claims, characterised in that each track (26a, 26b) is constituted by a section of a metal profiled member.

14. Body for a transmission joint as claimed in any one of Claims 13 or 14, characterised in that each track is constituted by an independent insert (26a, 26b).

15. Body for a transmission joint as claimed in any one of Claims 1 to 3, characterised in that the two adjacent tracks (26a, 26b) of two neighbouring bearing passageways are interconnected by an inner longitudinal part (150) which is integral therewith so as to constitute an insert.

16. Body for a transmission joint as claimed in Claim 15, characterised in that each of the inserts in connected to the other inserts by an outer longitudinal part integral therewith so as to form a single insert (464).

17. Body for a transmission joint as claimed in one of Claims 1 to 13, characterised in that the two opposing tracks (226a, 226b) of a bearing passageway are interconnected by a transverse end portion (254) arranged in the end of the internal cavity.

18. Body for a transmission joint as claimed in Claim 17, characterised in that the transverse portion (254) is integral with the two tracks and bent at 90° with respect to the two tracks (226a, 226b).

19. Method for producing a body for a transmission joint as claimed in any one of the preceding claims, characterised in that it comprises:
a) disposing in an injection mould an outer case made from reinforced bearing material, bearing passageways in the form of at least one insert and a portion of a connection system;
b) injecting into the internal space the filling material which is constituted by a thermoplastic or thermosetting matrix reinforced with short fibres or particles, in which a portion of the connection system is received; and
c) stripping the body produced in this way.

20. Mould (776) for carrying out the method as claimed in Claim 19, characterised in that it comprises an outer wall (782) which receives the case (24) and the connection system (22) in parts (784) having complementary profiles, a central core (800) the outer profile of which is complementary to that of the internal cavity (48) of the body and which includes means for maintaining in position, and a transverse closing wall (796) axially defining the said internal space, the said maintaining means are constituted by at least one permanent magnet (802, 804) fixed to the core which cooperate with bearing passageways produced in the form of at least one metal insert.

## Patentansprüche

1. Antriebsgelenkkörper (20) des Typs mit mehreren Lagerbahnen, die als mindestens ein metallischer Einsatz ausgebildet und um die Achse des Körpers herum verteilt sind und jeweils zwei zum Zusammenwirken mit Gelenkelementen des Antriebsgelenks und einem System zur Verbindung des Gelenkkörpers mit einem Antriebsorgan vorgesehene Bahnen aufweisen, dadurch gekennzeichnet, daß er einen Mantel aufweist, der aus einem durch durchgehende Fasern verstärkten Verbundmaterial gebildet ist und in dessen Innerem die Lagerbahnen vorgesehen sind, daß der radial durch die Innenumfangsfläche (28) des Mantels (24) und durch die der Innenumfangsfläche zugewandten Flächen (32) der Lagerbahnen begrenzte Innenraum mit einem Material (34) ausgefüllt ist, das aus einer wärmehärtbaren oder thermoplastischen Matrix besteht, die durch kurze Fasern oder Partikel verstärkt ist, und daß ein Teil (42) des Verbindungssystems (22) in dem Füllmaterial aufgenommen ist.

2. Antriebsgelenkkörper nach Anspruch 1, dadurch gekennzeichnet, daß der Teil (42) des Verbindungssystems an seiner äußeren Zylinderfläche axiale Flügel (44) aufweist, die radial nach innen vorstehen und in dem Material (34), mit dem sie zur Übertragung des Drehmoments an die Bahnen (26a, 26b) zusammenwirken, eingebettet sind.

3. Antriebsgelenkkörper nach Anspruch 2, dadurch gekennzeichnet, daß die Flügel durch axiale Einkehlungen (44) gebildet sind.

4. Antriebsgelenkkörper nach einem der vorhergehenden Ansprüche, dadurch gekennzeichnet, daß der Teil (42) des Verbindungssystems den Innenraum axial begrenzt und einen Boden der inneren Ausnehmung (48) des Körpers bildet.

5. Antriebsgelenkkörper nach Anspruch 1, dadurch gekennzeichnet, daß der Teil des Verbindungssystems wenigstens einen in das Füllmaterial (934) eingebetteten metallischen Einsatz (998) aufweist.

6. Antriebsgelenkkörper nach einem der vorhergehenden Ansprüche, dadurch gekennzeichnet, daß der Mantel ein Zylinder ist.

7. Antriebsgelenkkörper nach Anspruch 6, dadurch gekennzeichnet, daß die Leitlinie des Zylinders im wesentlichen polygonal ist.

8. Antriebsgelenkkörper nach Anspruch 6, dadurch gekennzeichnet, daß die Leitlinie des Zylinders ein Kreis ist.

9. Antriebsgelenkkörper nach einem der vorhergehenden Ansprüche, dadurch gekennzeichnet, daß die durchgehenden Verstärkungsfasern des Mantels winklig in bezug zur Achse des Körpers angeordnet sind.

10. Antriebsgelenkkörper nach einem der vorhergehenden Ansprüche, dadurch gekennzeichnet, daß ein Teil des Füllmaterials (34) sich über die Außenumfangsfläche des Mantels (24) erstreckt.

11. Antriebsgelenkkörper nach Anspruch 10, dadurch gekennzeichnet, daß der Teil des Materials eine funktionelle Befestigungsfläche (38), insbesondere für eine Dichtung oder eine Abdeckung, aufweist.

12. Antriebsgelenkkörper nach einem der Ansprüche 10 oder 11, dadurch gekennzeichnet, daß ein äußeres Bestandteil in den Teil (34) des Füllmaterials eingebettet ist.

13. Antriebsgelenkkörper nach einem der vorhergehenden Ansprüche, dadurch gekennzeichnet, daß jede Bahn (26a, 26b) aus einem Abschnitt eines Metallprofils gebildet ist.

14. Antriebsgelenkkörper nach einem der Ansprüche 12 oder 13, dadurch gekennzeichnet, daß jede Bahn aus einem unabhängigen Einsatz (26a, 26b) besteht.

15. Antriebsgelenkkörper nach einem der Ansprüche 1 bis 3, dadurch gekennzeichnet, daß die beiden benachbarten Bahnen (26a, 26b) zweier benachbarter Lagerbahnen miteinander durch ein einstückig ausgebildetes inneres längliches Teil (150) derart verbunden sind, daß sie einen Einsatz bilden.

16. Antriebsgelenkkörper nach Anspruch 15, dadurch gekennzeichnet, daß jeder der Einsätze mit den anderen Einsätzen durch ein einstückig ausgebildetes längliches äußeres Teil derart verbunden ist, daß sie einen einzelnen Einsatz (464) bilden.

17. Antriebsgelenkkörper nach einem der Ansprüche 1 bis 13, dadurch gekennzeichnet, daß die beiden einander gegenüberliegenden Bahnen (226a, 226b) einer Lagerbahn untereinander durch einen querverlaufenden Endbereich (254) verbunden sind, der im Boden des inneren Hohlraums vorgesehen ist.

18. Antriebsgelenkkörper nach Anspruch 17, dadurch gekennzeichnet, daß der querverlaufende Bereich (254) ein einstückig mit den beiden Bahnen ausgebildetes und ein in bezug auf die beiden Bahnen (226a, 226b) um 90° abgewinkeltes Teil ist.

19. Verfahren zur Herstellung eines Antriebsgelenkkörpers nach einem der vorhergehenden Ansprüche, gekennzeichnet durch die folgenden Schritte:
a) Anordnen eines äußeren Mantels aus verstärktem Verbundmaterial, der als wenigstens ein Einsatz ausgebildeten Lagerbahnen und eines Teils des Verbindungssystems in einer Spritzgußform;
b) Einspritzen des aus einer mit kurzen Fasern oder Partikeln verstärkten thermoplastischen oder wärmehärtbaren Matrix bestehenden Füllmaterials, das einen Teil des Verbindungssystems aufnimmt, in den Innenraum; und
c) Entformen des derart gebildeten Körpers.

20. Form (776) zur Durchführung des Verfahrens nach Anspruch 19, dadurch gekennzeichnet, daß sie eine Außenwand (782), die den Mantel (24) und das Verbindungssystem (22) in Teilen (784) mit komplementären Profilen aufnimmt, einen zentralen Kern (800), dessen äußeres Profil zu demjenigen des inneren Hohlraums (48) des Körpers komplementär ist und der Fixierungseinrichtungen aufweist, und eine querverlaufende Verschlußwand (796) aufweist, die den Innenraum axial begrenzt, und daß die genannten Fixierungseinrichtungen durch wenigstens einen an dem Kern befestigten Permanentmagneten (802, 804) gebildet sind, der mit den als wenigstens ein metallischer Einsatz ausgebildeten Lagerbahnen zusammenwirkt.
